# FASCICULE DE BREVET EUROPEEN

(11) **EP 1 663 905 B1**
(45) Date de publication et mention de la délivrance du brevet: **14.11.2012**
(21) Numéro de dépôt: 04787372.4
(22) Date de dépôt: 14.09.2004
(51) Int. Cl.: C04B 28/04, C04B 14/34

(54) **MATERIAU COMPOSITE HAUTE RESISTANCE A L'ABRASION COMPRENANT DE LA GRENAILLE BASE D'ACIER ET PROCEDE DE FABRICATION D UN TEL MATERIAU.**
HOCHABRIEBFESTER VERBUNDWERKSTOFF MIT AUF STAHL BASIERENDEM SCHROT UND HERSTELLUNGSVERFAHREN DAFÜR
HIGH-WEARING RESISTANT COMPOSITE MATERIAL COMPRISING STEEL-BASED SHOT AND METHOD FOR PRODUCING SAID MATERIAL

(30) Priorité: 15.09.2003 FR 0310783
(43) Date de publication de la demande: 07.06.2006
(73) Titulaire: Winoa, 38570 Le Cheylas (FR)
(72) Inventeur: BURDIN, Jacques, F-73000 Chambéry (FR); VACHEY, Daniel, F-73000 Bassens (FR); MARIOTTI, Gérard, F-73490 La Ravoire (FR); MINIER, Aline, F-38640 Claix (FR)
(74) Mandataire: Hecké, Gérard
(86) Numéro de dépôt international: PCT/FR2004/002326
(87) Numéro de publication internationale: WO 2005/040061

(56) Documents cités:
- EP-A- 0 934 915
- WO-A-90/13524
- GB-A- 1 025 936
- US-A- 4 482 385
- PATENT ABSTRACTS OF JAPAN vol. 1996, no. 02, 29 février 1996 (1996-02-29) & JP 07 276340 A (MITSUBISHI MATERIALS CORP), 24 octobre 1995 (1995-10-24) cité dans la demande

## Description

### Domaine technique de l'invention

L'invention concerne un matériau composite obtenu par mélange avec de l'eau d'une composition constituée par:
- un liant hydraulique constitué par du ciment ayant une teneur en aluminate tricalcique au moins inférieure à 5% en poids par rapport au poids total de liant hydraulique,
- de la grenaille à base d'acier ayant une distribution granulométrique comprise entre 120µm et 3000µm,
- de la fumée de silice non densifiée ayant une granulométrie inférieure ou égale à 2µm,
- un superplastifiant très haut réducteur d'eau,
le rapport entre la quantité en poids d'eau et la quantité en poids de liant hydraulique étant compris entre 0,16 et 0,25.

L'invention concerne également un procédé de fabrication d'un tel matériau composite.

### État de la technique

Pour protéger certaines pièces contre l'abrasion, notamment dans les applications industrielles, il est connu d'utiliser des éléments en aciers spéciaux ou en minéraux de grande dureté, présentant généralement de très grandes performances mécaniques de manière à limiter leur épaisseur. Les aciers spéciaux ou les minéraux de grande dureté sont cependant peu pratiques à mettre en oeuvre car leur mise en forme nécessite leur fusion. Ainsi, ils peuvent être coulés dans un moule et fixés mécaniquement sur les pièces à protéger, après leur refroidissement ou bien ils peuvent être directement appliqués à chaud sur les pièces à protéger.

En génie civil, des bétons ou des mortiers peuvent être utilisés dans le domaine de la protection contre l'usure ou l'effraction. Ils présentent l'avantage d'être faciles à mettre en oeuvre puisqu'ils peuvent être coulés dans un moule à température ambiante. Cependant, les performances mécaniques des bétons ou des mortiers sont très inférieures à celles des éléments métalliques ou des minéraux de grande dureté tels que les minéraux électrofondus. Ainsi, dans le document WO-A-9013524, un article façonné comprend trois types de particules solides inorganiques ayant des classes granulométriques distinctes, par exemple de la fumée de silice ayant une taille de grain inférieure à 2µm, du ciment ayant une granulométrie comprise entre 2 et 7µm et un mélange de particules métalliques et de bauxite calcinée ayant une granulométrie inférieure à 100µm. De telles formulations sont, de plus, très onéreuses car elles nécessitent l'utilisation de quantités très importantes de particules fines et ultrafines, et la bauxite calcinée est relativement coûteuse.

Pour améliorer les performances mécaniques des bétons ou mortiers, il est connu d'incorporer, dans la matrice cimentaire, des fibres métalliques ou organiques et d'éventuellement compléter la mise en forme dans un moule par un pressage. A titre d'exemple, le document EP-A-0934915 décrit un béton à très haute performance, offrant une relativement bonne résistance à l'abrasion et comprenant du ciment, un mélange de sables de bauxites calcinées de différentes granulométries, de la fumée de silice, un superplastifiant réducteur d'eau, un agent anti-mousse et des fibres. De même, le document FR-A-2640962 décrit un béton composite à très hautes performances, apte à limiter la pénétration de projectiles et comprenant du ciment, des agrégats de dureté élevée qui peuvent être en acier ou en fonte, de la micro-silice, de l'eau, des adjuvants constitués par des fluidifiants, un anti-mousse et des fibres métalliques. La mise en oeuvre de tels bétons fibrés nécessite, cependant, l'utilisation d'équipements particuliers pour l'introduction des fibres et le malaxage du béton fibré, ce qui rend leur mise en oeuvre relativement peu pratique et coûteuse. De plus, les fibres constituent, dans la matrice cimentaire, des défauts locaux qui, à leur émergence sur les surfaces, sont autant de sites potentiels d'arrachement. Ainsi, elles sont généralement exclues des revêtements de haute performance.

Pour protéger des pièces contre l'abrasion, il est également possible de réaliser des assemblages d'éléments, de blocs, de pavés ou de plaques en roche dure telle qu'en granite ou en basalte. Mais la pose et le scellement de ses assemblages doivent être très soignés pour assurer la tenue quasiment immédiate du revêtement et ils s'avèrent particulièrement fastidieux et onéreux.

Dans le brevet US4482385, il a été proposé d'ajouter des particules irrégulières en acier inoxydable dans un matériau à base de ciment Portland de type III pour obtenir un matériau composite ayant une conductivité thermique élevée et une faible perméabilité au vide. Le matériau composite comporte 24,28% en poids de ciment Portland, 53,45% en poids de particules en acier, 6,66% en poids d'eau, 3,31 % en poids de fumée de silice, 11,82% en poids d'agrégats fins constitués de silice cristalline finement divisée, 0,47% en poids de superplastifiant et 0,01% en poids d'agent anti-mousse. Les particules en acier inoxydables sont utilisées, dans le matériau à base de ciment, comme des charges augmentant la conductivité thermique du matériau ainsi que sa densité (de l'ordre de 3,5). Les particules en acier sont introduites dans le matériau composite sous forme de deux classes granulométriques. Ainsi, le matériau composite comporte 34,77% en poids de particules en acier avec une granulométrie de 10/25 Mesh (c'est-à-dire comprise entre 700 et 2000µm) et 18,68% en poids de particules en acier avec une granulométrie de 80/100 Mesh (c'est-à-dire comprise entre 150 et 180µm).

Le document JP-A-7276340 décrit un procédé de fabrication d'un béton à haute résistance comportant deux types d'agrégats de classes granulométriques distinctes : des agrégats grossiers constitués de fer et de gravier avec une granulométrie comprise entre 15 et 20mm et des agrégats fins constitués d'agrégats naturels et de sphères métalliques dont la taille est, comprise entre 0,08 et 5mm. Le procédé consiste à introduire et à presser, dans un récipient, les agrégats grossiers, puis à injecter dans le récipient et sous pression, un mortier obtenu en mélangeant du ciment, de la poudre de silice, les agrégats fins naturels, les agrégats fins métalliques et un agent réducteur d'eau. La fabrication d'un tel béton à haute résistance, avec des agrégats grossiers et des agrégats plus fins, se révèle être également difficile à mettre en oeuvre et relativement coûteuse.

### Objet de l'invention

L'invention a pour but de réaliser un matériau composite ayant une très bonne résistance à l'abrasion, de préférence sensiblement équivalente à celle des aciers spéciaux et des minéraux électrofondus, tout en étant facile à formuler et à mettre en forme à froid et relativement peu coûteux.

Selon l'invention, ce but est atteint par les revendications annexées.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
Les figures 1 et 2 représentent des clichés obtenus par microscopie électronique à balayage de particules de grenaille, respectivement angulaires et rondes.
La figure 3 représente un cliché photographique d'éprouvettes en matériau composite ayant subit un test d'abrasion.
Les figures 4 et 5 illustrent un matériau composite subissant un essai d'adhérence sur du métal.
Les figures 6 à 8 représentent respectivement un cliché obtenu par microscopie électronique à balayage, un cliché obtenu par spectrométrie X à dispersion d'énergie et une analyse granulométrique d'une première grenaille à base d'acier.
Les figures 9 à 11 représentent respectivement un cliché obtenu par microscopie électronique à balayage, un cliché obtenu par spectrométrie X à dispersion d'énergie et une analyse granulométrique d'une seconde grenaille à base d'acier.
Les figures 12 à 14 représentent respectivement un cliché obtenu par microscopie électronique à balayage, un cliché obtenu par spectrométrie X à dispersion d'énergie et une analyse granulométrique d'une troisième grenaille à base d'acier.
La figure 15 représente un cliché obtenu par spectrométrie X à dispersion d'énergie d'une quatrième grenaille à base d'acier.
Les figures 16 à 18 représentent des clichés obtenus par microscopie électronique à balayage d'un matériau composite selon l'invention.

### Description de modes particuliers de réalisation.

Un matériau composite selon l'invention est obtenu en mélangeant avec de l'eau une composition constituée par:
- 100 parties en poids d'un liant hydraulique,
- entre 250 et 800 parties en poids de grenaille à base d'acier, et de préférence entre 350 et 550 parties en poids de grenaille à base d'acier,
- entre 10 et 15 parties en poids de la fumée de silice non densifiée,
- un superplastifiant très haut réducteur d'eau, de préférence formé par un copolymère acrylique spécifiquement développé pour réduire fortement la proportion en eau,
- et un agent anti-mousse.

Le liant hydraulique est constitué par du ciment ayant une teneur en aluminate tricalcique inférieure à 5% par rapport au poids total de liant et de préférence inférieure à 3%. Le ciment est, de préférence, un ciment Portland pur tel que le ciment Portland classé CEM I 52,5 PM.ES selon la norme européenne EN 197-1.

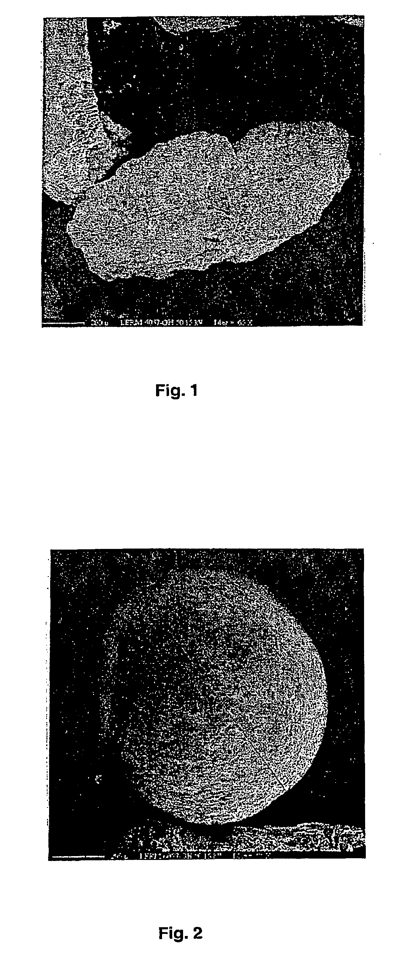

La grenaille à base d'acier est constituée par une pluralité de grains à base d'acier dont la distribution granulométrique est comprise entre 120µm et 3000µm et de préférence entre 500 et 1200µm. Elle est, de préférence angulaire ou ronde, et abrasive. Par grenaille à base d'acier angulaire ou ronde, on entend que la majorité des grains constituant la grenaille est angulaire ou ronde, comme illustré aux figures 1 et 2. La grenaille est, de préférence, constituée par un alliage à base de fer comportant également au moins :
- entre 0,0 et 3,5 % de carbone,
- entre 0,0 et 2% de silicium,
- entre 0,0 et 2 % de manganèse,
- entre 0,0 et 20 % de chrome,
- entre 0,0 et 10 % de nickel.

Préférentiellement, l'alliage à base de fer comporte au moins de 0,0 à 1,2 % de carbone, de 0,0 à 1,2% de silicium, de 0,0 à 1,2 % de manganèse, de 0,0 à 1,2 % de chrome et de 0,0 à 0,3% de nickel.

La composition permettant d'obtenir le matériau composite peut comprendre un type de grenaille ou un mélange d'au moins deux types de grenaille, distincts par leur distribution granulométrique.

La fumée de silice est non densifiée et elle a une granulométrie inférieure ou égale à 2µm. A titre d'exemple, la fumée de silice peut être une fumée de silice telle que celle provenant de l'usine d'Anglefort de Pechiney.

L'agent anti-mousse est destiné à réduire la porosité du matériau composite après durcissement. A titre d'exemple, l'agent anti-mousse utilisé peut être du Cimparement® commercialisé par la société AXIM. Le superplastifiant très haut réducteur d'eau est, de préférence, choisi parmi les gammes des produits CIMFLUID® commercialisés par la société AXIM et de préférence parmi la gamme référencée ALLEGRO®.

Le rapport entre la quantité en poids d'eau et la quantité en poids de liant hydraulique constitué par du ciment, aussi appelé rapport Eau sur Ciment ou E/C, est compris entre 0,16 et 0,25 et de préférence entre 0,20 et 0,25. Un tel rapport E/C permet d'obtenir un coulis, aussi appelé pâte, ayant une bonne fluidité, ce qui permet de faciliter l'addition, de préférence en phase ultime, d'une quantité maximale de grenaille pour une ouvrabilité fixée du mélange frais prêt à être mis en forme.

La valeur de la taille de grain D10 de la grenaille est au moins huit fois supérieure à la valeur de la taille de grain D90 du liant hydraulique. Par taille de grain D10 de la grenaille et D90 du ciment, on entend respectivement des tailles de tamis dont le passant constitue respectivement 10% et 90% du volume total des grain de grenaille et de ciment. Un tel rapport entre la valeur de D10 de la grenaille et la valeur de D90 du ciment permet, notamment, d'obtenir une compacité maximale de la pâte et donc de tres hautes performances mécaniques pour le matériau composite. Ainsi, à titre d'exemple, pour un ciment ayant une taille de grain D90 de 50µm, la grenaille aura une taille de grain D10 supérieure à 400µm.

Le matériau composite peut être obtenu par tout type de procédé connu. Il est obtenu en formant un mélange frais, à partir du mélange successif d'eau, de superplastifiant très haut réducteur d'eau, éventuellement d'agent anti-mousse, de fumée de silice, de ciment et de grenaille. Le mélange frais est, de préférence, formé en introduisant et en mélangeant préalablement, dans un mélangeur à haute turbulence l'eau, le superplastifiant très haut réducteur d'eau, la fumée de silice et le ciment de manière à former un coulis, la grenaille d'acier étant ensuite incorporée au coulis dans un malaxeur. Une faible quantité d'eau, par exemple de l'ordre de 2% par rapport à la quantité de ciment, peut être ajoutée dans le malaxeur, une fois le coulis formé, de manière à ajuster l'ouvrabilité du coulis.

Le mélange frais est ensuite mis en forme avant durcissement. A titre d'exemple, le mélange frais est mis en forme de manière à obtenir, après durcissement, un revêtement anti-usure, un blindage ou un élément manufacturé de protection qui peut être par exemple usiné. Le mélange frais peut, par exemple, être mis en forme en étant coulé dans un moule de manière à obtenir la forme finale du matériau composite puis, une fois durci, il est démoulé. Il peut, également, être mis en forme par injection, par thixoformage, par extrusion, par projection in situ. De plus, il peut ensuite subir un traitement thermique après la mise en forme.

La masse volumique d'un tel matériau composite est comprise entre 4000 et 6000kg/m³ et de préférence entre 4500 et 5200kg/m³. Une telle masse volumique assure au matériau composite une bonne résistance au choc et le rend peu fragile.

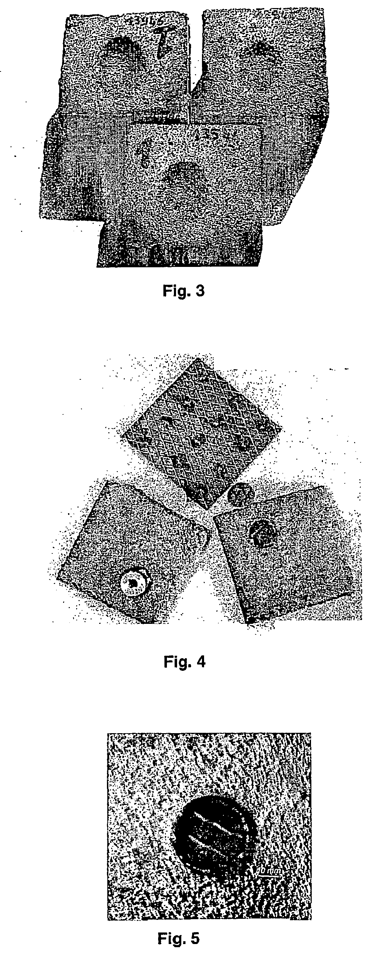

La résistance à l'abrasion d'un tel matériau composite a été mesurée sur un banc d'essai d'abrasion développé par la Compagnie Nationale du Rhône (C.N.R), visant à reproduire en laboratoire les conditions d'abrasion rencontrées dans les ouvrages hydrauliques. Des éprouvettes de matériau à tester sont immergées dans un bassin et sont attaquées par un jet d'eau chargée de sable, selon un angle de 45°, pendant une période de temps comprise entre 15mn et 75mn. Le jet d'eau chargé de sable crée une empreinte dans chaque éprouvette comme illustré à la figure 3. Le volume de chaque empreinte est mesuré par pesée à l'aide de mercure. Parallèlement, des essais sont réalisés sur du verre de forte épaisseur. Il résulte de ces pesées, un indice d'abrasion 1 correspondant au rapport du volume de l'empreinte créée sur le matériau sur le volume moyen des empreintes créées sur le verre. L'indice d'abrasion 1 est d'autant plus faible que la résistance à l'usure et à l'abrasion est élevée et il peut varier dans une fourchette de valeurs comprises entre quelques dixièmes pour les matériaux les plus résistants et 5 ou 10 pour les matériaux les moins résistants. A titre d'exemple, le tableau ci-dessous présente l'indice d'abrasion de différents matériaux :

| **Matériau** | **Indice d'abrasion I** |
|---|---|
| Granite naturel | 0,5 |
| Basalte électrofondu | 0,16 |
| Alumine électrofondue | 0,01 |
| Béton standard | 2,5 |
| Béton à ultra haute performance | 1,25 |

L'indice d'abrasion (1) d'un matériau composite selon l'invention, mesuré sur le banc d'essai d'abrasion selon le protocole mis au point par le C.N.R, est compris entre 0,15 et 1,0 et, de préférence entre 0,15 et 0,45. Ainsi, la présence de grenaille en forte proportion dans un matériau composite selon l'invention, ainsi que le rapport entre le D10 de la grenaille et le D90 du ciment, permettent d'obtenir un matériau composite présentant non seulement une résistance à l'abrasion élevée mais également des performances mécaniques élevées ainsi qu'une bonne adhérence sur métal. Ainsi, un matériau composite selon l'invention peut avoir une résistance à la flexion à 28 jours comprise entre 15 et 30MPa et, de préférence, entre 25 et 30MPa et une résistance à la compression à 28 jours comprise entre 150 et 300MPa.

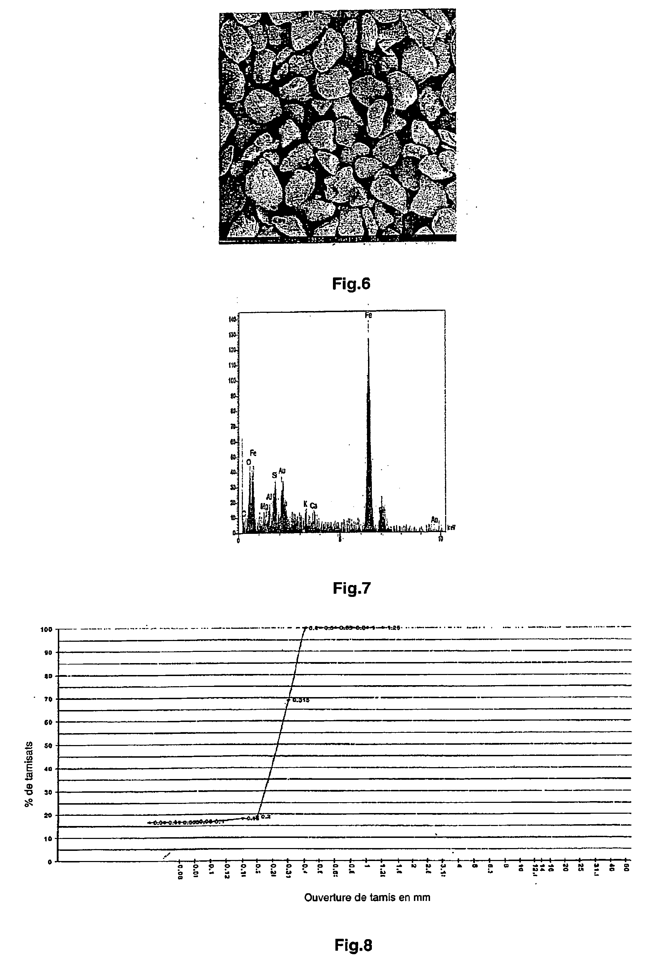

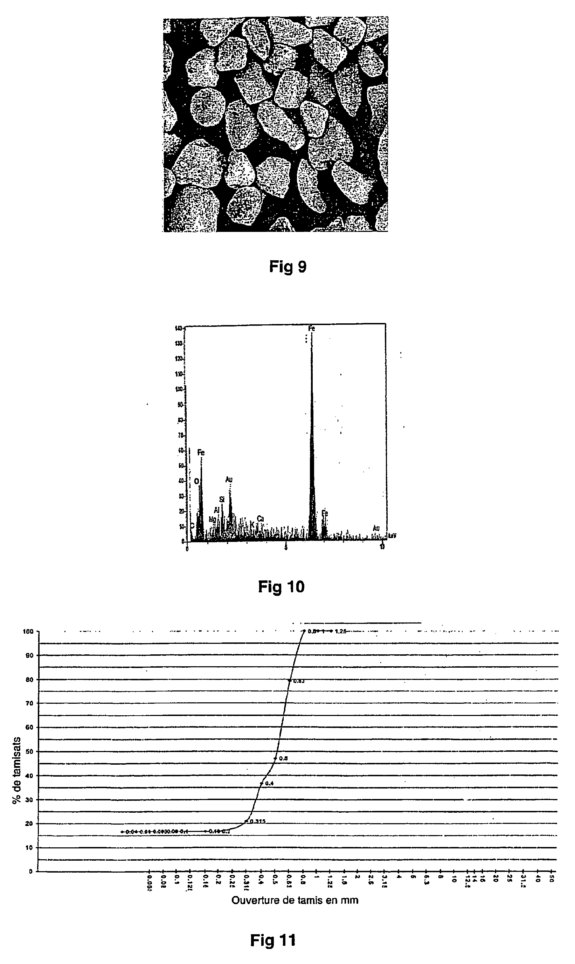

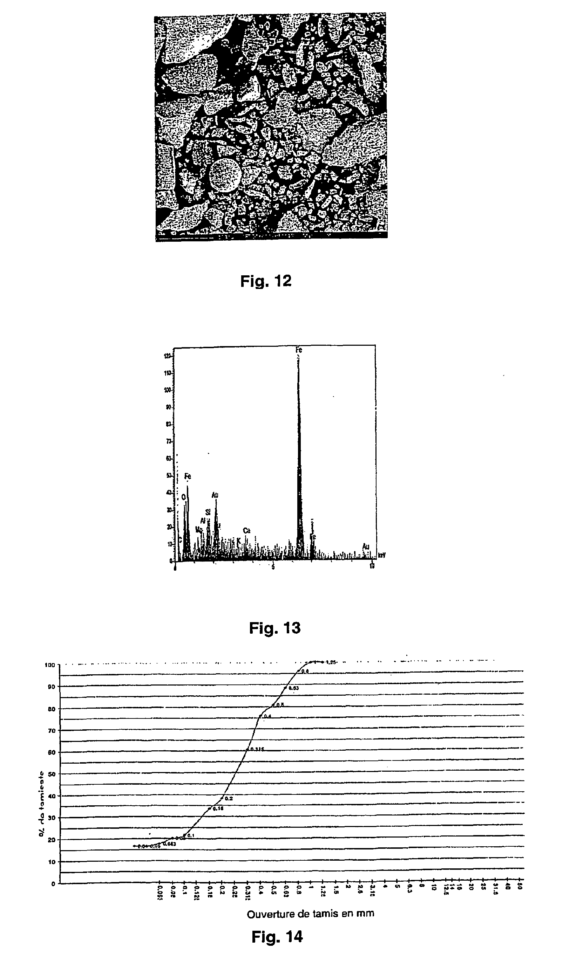

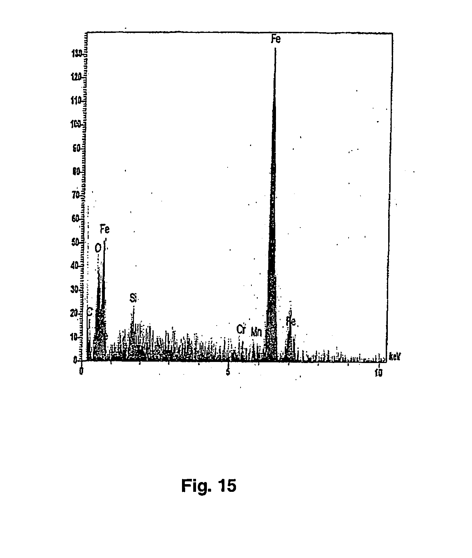

A titre d'exemple, différentes formulations de matériaux composites ont été réalisées et testées avec cinq types de grenailles 1 à 5. L'observation au microscope électronique à balayage couplée à une analyse élémentaire par spectrométrie X à dispersion d'énergie (EDS) montre, aux figures 6, 9, 12 que les grenailles 1 et 2 sont constituées de particules sensiblement arrondies tandis que la grenaille 3 est constituée de quelques particules arrondies et de particules formant des baguettes anguleuses (figure 12). La grenaille 4 est une grenaille ronde et la grenaille 5 est angulaire et est constituée de grains massifs aux arêtes très vives. Comme l'illustrent les clichés obtenus par spectrométrie X à dispersion d'énergie représentés aux figures 7, 10, 13 et 15, les grenailles 1, 2, 3, 4 et 5 sont principalement constituées de fer, de carbone, de silicium et de manganèse auxquels sont associés, sous forme de traces, des éléments chimiques particuliers.

Les distributions granulométriques des grenailles 1, 2 et 3 sont, respectivement représentées sur les figures 8, 11 et 14. Les distributions granulométriques des différentes classes de grenaille ont été déterminées à l'aide de tamis classiquement utilisés pour déterminer la distribution granulométrique des granulats de béton, conformément selon la norme française NF P 18-560. Ainsi, comme illustré sur les figures 7, 10 et 13, la granulométrie de la grenaille 1 est comprise entre 200µm et 400µm tandis que les distributions granulométriques des grenailles 2 et 3 sont respectivement comprises entre 250µm et 800µm et 100µm et 1250µm. Les fuseaux granulaires des grenailles 1 et 2 sont très resserrés tandis que celui de la grenaille 3 est plus étalé. La granulométrie de la grenaille 4 est comprise entre 700 et 1400µm, celle de la grenaille 5 est comprise entre 1000 et 2000 µm.

Les grenailles 1, 2, 3 ont respectivement une masse volumique absolue de 7,01, 7,35 et 6,65, ainsi qu'une compacité propre de 0,68, 0,72, 0,69. La compacité propre de chaque grenaille a été mesurée en introduisant 7,5kg de grenaille dans un moule métallique indéformable fermé par un piston exerçant une pression de 10kPa. Le moule est alors fixé sur une table vibrante et est soumis à une vibration de 150Hz pendant 4 minutes. La compacité propre est alors obtenue par la relation suivante: C = M/(d*V), où M est la masse de l'échantillon en kg, d la masse volumique en g/cm³ et V le volume final en m³.

Les formulations réalisées avec ces différentes grenailles sont illustrées dans le tableau 1 ci-dessous.

| **Formulation en g** | **Ciment** | **Fumée de silice** | **Sable** | **Grenaille 1** | **Grenaille 2** | **Grenaille 3** | **Grenaille 4** | **Grenaille 5** | **Reducteur d'eau** | **Anti-mouse** | **E/C** |
|---|---|---|---|---|---|---|---|---|---|---|---|
| **Ref-1** | 1012,4 | 151,7 | 996 | - | - | - | - | - | 30,43 | 10,1 | 0,20 |
| **Ref-2** | 996,3 | 149,3 | 996 | - | - | - | - | - | 29,9 | 10,0 | 0,21 |
| **F-1** | 996,3 | 149,3 | - | - | 2762,1 | - | - | - | 29,9 | 10,0 | 0,21 |
| **F-2** | 996,3 | 149,3 | - | 658,6 | 2071,6 | - | - | - | 29,9 | 10,0 | 0,21 |
| **F-3** | 811 | 121,5 | - | - | 3675 | - | - | - | 24,3 | 8,1 | 0,20 |
| **F-4** | 785,5 | 117.7 | - | - | 3675 | - | - | - | 23,6 | 7,79 | 0,22 |
| **F-5** | 1005,8 . | 150,7 | - | 701 | 2205 | - | - | - | 30,2 | 10,0 | 0,18 |
| **F-6** | 838,2 | 125,6 | - | 876,3 | 2756,3 | - | - | - | 25,1 | 8,4 | 0,18 |
| **F-7** | 670,5 | 100,5 | | 1051,5 | 3307,5 | | | | 20,1 | 6,7 | 0,20 |
| **F-8** | 852,5 | 127,8 | - | 876,3 | 2756,3 | | | - | 25,6 | 8,5 | 0,17 |
| **F-9** | 852,5 | 127,8 | - | - | 3675 | - | - | - | 25,6 | 8,5 | 0,17 |
| **F-10** | 852,5 | 127,8 | - | - | - | 3325 | - | - | . 25,6 | 8,5 | 0,19 |
| **F-11** | 815,9 | 122,3 | - | - | 3675 | - | - | - | 28,6 | 12,2 | 0,18 |
| **F-12** | 805,4 | 120,7 | - | 908,1 | 2725,4 | - | - | - | 28,2 | 12,1 | 0,19 |
| **F-13** | 750,9 | 112,6 | - | - | - | 3390 | - | - | 26,3 | 11,3 | 0,24 |
| **F-14** | 4045,3 | 603,8 | - | | | - | 18225 | - | 121,4 | 80,9 | 0,17 |
| **F-15** | 4045,3 | 603,8 | - | | | - | - | 18750 | 121,4 | 80,9 | 0,17 |
| **F-16** | 740,9 | 111,1 | | | | 3375 | | | 25,9 | 11,1 | 0,247 |

Toutes les formulations F1 à F16 ont été réalisées selon le même procédé. Les composants ont été mélangés à l'aide d'un mélangeur à haute turbulence de la manière suivante :
- introduction de l'eau, des adjuvants et de la fumée de silice, et agitation de l'ensemble pendant 1 minute,
- introduction du ciment et agitation de l'ensemble pendant 1 minute, de manière à obtenir une pâte très ouvrable à fluide,
- introduction de la grenaille et malaxage de l'ensemble jusqu'à homogénéisation,
- ajout d'eau de manière à ajuster l'ouvrabilité à l'application, jusqu'à un maximum de 2% du poids de ciment.

Les formulations Ref-1 et Ref-2 correspondent à des formulations selon l'art antérieur comprenant du sable de quartz tandis que les formulations F-1 à F-16 correspondent à des formulations de matériaux composites selon l'invention.

Les formulations F-1, F-3, F-4, F-9 et F-11 comportent uniquement de la grenaille de type 2 tandis que les formulations F-2, F-5, F6, F-7, F-8 et F-11 comportent sensiblement 25% en poids de grenaille de type 1 et 75% en poids de grenaille de type 2. Les formulations F-10, F-13 et F-16 comportent uniquement de la grenaille de type 3, la formulation F-14 comporte uniquement de la grenaille de type 4 et la formulation F-15 uniquement de la grenaille 5.

Le tableau 2 ci-dessous indique les valeurs de masse volumique théorique, de volume théorique, de masse volumique réelle et apparente ainsi que la porosité accessible à l'eau des formulations données dans le tableau 1.

**Tableau 2**

| **Formulation en g** | **Masse volumique théorique en kg/m³** | **Volume théorique en ml** | **Masse volumique réelle en g/cm³** | **Masse volumique apparente en g/cm³** | **Porosité en %** |
|---|---|---|---|---|---|
| **Ref-1** | 2430 | 980 | 2,35 | 2,29 | 6,1 |
| **Ref-2** | 2420 | 980 | 2,34 | 2,27 | 6,8 |
| **F-1** | 4220 | 980 | 4,25 | 4,16 | 8,6 |
| **F-2** | 4190 | 980 | 4,20 | 4,12 | 7,8 |
| **F-3** | 4860 | 985 | 4,80 | 4,75 | 5,3 |
| **F-4** | 4840 | 985 | 4,82 | 4,77 | 5,8 |
| **F-5** | 4350 | 980 | 4,30 | 4,24 | 5,4 |
| **F-6** | 4835 | 985 | 4,78 | 4,74 | 4,4 |
| **F-7** | 5280 | 1000 | 5,13 | 5,09 | 4,3 |
| **F-8** | 4870 | 980 | 4,80 | 4,76 | 3,7 |
| **F-9** | 4920 | 980 | 4,81 | 4,77 | 4,3 |
| **F-10** | 4560 | 980 | 4,51 | 4,44 | 7,0 |
| **F-11** | 4654 | - | 4,77 | 4,71 | 2,2 |
| **F-12** | 4598 | - | 4,42 | 4,66 | 5,4 |
| **F-13** | 4291 | - | 4,50 | 4,45 | 5,0 |
| **F-14** | - | - | 4,80 | 4,75 | 4,8 |
| **F-15** | - | - | 4,88 | 4,83 | 5,2 |
| **F-16** | - | - | 4,41 | 4,36 | 5,6 |

Les matériaux composites ainsi obtenus ont une porosité comprise entre 4 et 9%, ils sont donc très compacts et ils présentent une forte réduction de l'amplitude du retrait endogène après prise par rapport aux formulations Ref-1 et Ref-2. Cette réduction permet de limiter les risques de fissuration potentielle du matériau lors de son application industrielle.

Des prismes de 4*4*16cm ont été réalisés et testés en flexion quatre points et en compression. Les résultats sont donnés dans le tableau 3 ci-dessous pour les différentes formulations données dans le tableau 1.

**Tableau 3**

| **Formulation en g** | **Rflexion-7 jours MPa** | **Rflexion-14 jours MPa** | **Rflexion-28 jours MPa** | **Rcompression-28jours MPa** |
|---|---|---|---|---|
| **Ref-1** | 10,1 | - | - | - |
| **Ref-2** | 10,0 | - | - | - |
| **F-1** | 9,4 | - | - | - |
| **F-2** | 9,4 | - | - | - |
| **F-3** | 21,0 | - | - | - |
| **F-4** | 20,3 | - | - | - |
| **F-5** | 22,0 | - | - | - |
| **F-6** | 22,3 | - | - | - |
| **F-7** | 19,3 | - | - | - |
| **F-8** | - | 26,6 | - | - |
| **F-9** | - | 24,2 | - | - |
| **F-10** | - | 19,4 | - | - |
| **F-11** | 22,0 | - | 27,7 | 240 |
| **F-12** | 21,3 | - | 28,7 | 250 |
| **F-13** | 20,7 | - | 25,8 | 225 |
| **F-14** | - | - | 26,4 | - |
| **F-15** | - | - | 27,6 | - |
| **F-16** | 16,8 | - | 23,6 | - |

La résistance à la flexion à 7 jours est comprise entre 9,4MPa et 23,OMPa pour les formulations F-1 à F-16 et la résistance à la compression à 28 jours est comprise entre 225 et 250 MPa pour les formulations F-11 à F-13. On constate que la résistance à la flexion de telles formulations est très supérieure à celle des formulations de référence Ref-1 et Ref-2. De plus, selon une étude récente de Atis et al., dans l'article "Relation between abrasion résistance and flexural strength of high volume fly ash concrete" (Materials and structures, vol 35, May 2002, pages 257-260), la résistance à la flexion peut être corrélée à la résistance à l'abrasion, ce qui implique une forte résistance à l'abrasion.

La résistance à l'abrasion des formulations F-11 à F-15 a été testée selon le banc d'essai développé par la Compagnie Nationale du Rhône, leur indice d'abrasion étant donné dans le tableau 4 ci-dessous.

**Tableau 4**

| **Formulation** | **Indice d'abrasion** |
|---|---|
| **F-11** | 0,43 |
| **F-12** | 0,57 |
| **F-13** | 0,35 |
| **F-14** | 0,23 |
| **F-15** | 0,18 |

Ainsi, les matériaux composites selon l'invention présentent non seulement une excellente résistance à l'abrasion, supérieure à celle du granit de référence du test CNR, mais aussi à la flexion et à la compression ainsi qu'une excellente adhérence sur du métal.

En effet, une série de 20 corps d'épreuves a été confectionnée afin de caractériser l'adhérence du matériau composite obtenu à partir de la formulation F-13 sur du métal. Pour ce faire, des grilles en métal déployé ont été soudées sur des plaques d'acier standard de 100*100*4mm et une couche de latex a été appliquée sur chaque grille. Une couche d'environ 8mm de la pâte obtenue à partir de la formulation F-13 a été appliquée sur la surface des plaques d'acier.

Les corps d'épreuves ainsi préparés ont été conservés pendant 28 jours à une température d'environ 20°C et trois séries de 5 corps d'épreuves ont été soumises à des traitements thermiques respectivement de 70°C, 120°C et 170°C et une quatrième série de 5 corps d'épreuves est testée après conservation à 20°C.

Les essais d'adhérence ont été réalisés conformément à la norme NF P 18-852, à l'aide d'un dynamomètre à soufflets d'une capacité égale à 16kN. Ces essais comportent les étapes suivantes :
- carottage dans la plaque, sous eau, d'un espace de diamètre 20mm jusqu'au niveau de métal déployé,
- après une période de séchage à 20°C, des pastilles de 20mm de diamètre ont été collées sur les plaques à l'aide d'une résine adhésive telle que celle connue sous le nom de Sikapur® commercialisée par la société Sika.
- réalisation des essais après séchage complet de la colle.

La figure 4 illustre une plaque d'acier standard sur laquelle est disposée la grille en acier déployé, une plaque carottée et comportant une pastille et une plaque après le test d'arrachage.

Les résultats des essais d'arrachage sont donnés dans le tableau 5 ci-dessous.

**Tableau 5**

| **N° d'essai/T°** | **20°C** | **70°C** | **120°c** | **150°C** |
|---|---|---|---|---|
| **Essai 1** | >16kN | >16kN | >16kN | >16kN |
| **Essai 2** | >16kN | >16kN | >16kN | >16kN |
| **Essai 3** | >16kN | >16kN | >16kN | >16kN |
| **Essai 4** | >16kN | >16kN | >16kN | >16kN |
| **Essai 5** | 12,85kN | 12,85kN | >16kN | >16kN |
| **Type de rupture** | A la base de la grille | A la base de la grille | - | - |

Les résultats de ces essais montrent une très bonne adhérence entre la formulation F-13 et la plaque en acier, quelle que soit la température à laquelle les corps d'épreuves ont été préalablement exposés. En effet, à l'exception de deux corps d'épreuves, la charge de rupture est majoritairement supérieure à la capacité maximale de l'appareil utilisé. Les deux corps d'épreuves de l'essai 5, respectivement soumis préalablement à des températures de 20°C et de 70°C, ont subi une rupture interne, à la base de la grille en métal déployé (figure 5), pour une charge de 12,5kN. La contrainte de traction correspondant à la charge maximale de 16kN est égale à 50Mpa. Ainsi, dans quatre cas sur cinq, l'adhérence en traction dépasse 50 MPa.

Une telle formulation permet donc d'obtenir un matériau composite ayant une bonne adhérence avec l'acier, mais également une excellente tenue de ses propriétés mécaniques et physiques jusqu'à au moins 150°C. En effet, il a été constaté que l'application de cycles thermiques à 70°C, 120°C et 150°C n'engendre pas de perte de résistance à la flexion ni d'accroissement de la porosité accessible à l'eau ;

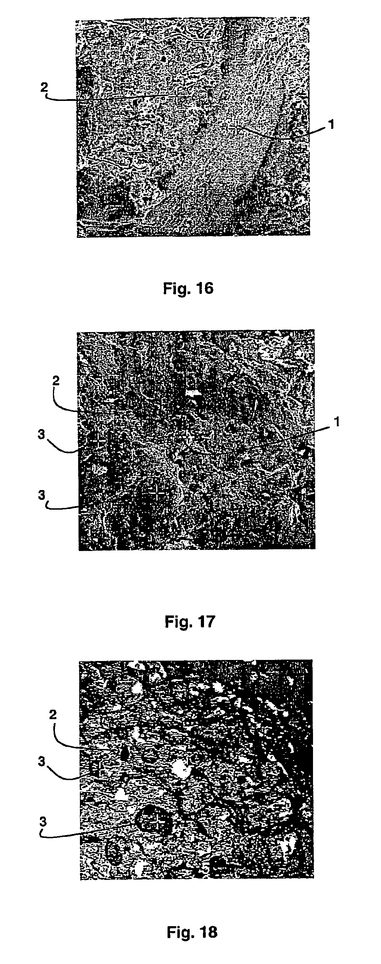

Sur les figures 16 à 18, le matériau composite, obtenu grâce à la formulation 13 et conservé à 20°C, a été observé au microscope électronique à balayage. Ainsi, à la figure 16, on peut observer le contact s'établissant entre la grenaille d'acier 1 et la matrice cimentaire 2 dans le matériau composite élaboré 7 jours auparavant. Sur les figures 17 et 18, le matériau composite élaboré 28 jours auparavant présentent quelques bulles d'air 3 dans la matrice cimentaire 2 ainsi que des fissures formées au moment de la préparation. Ainsi, on peut constater qu'à faible mûrissement, le matériau présente une bonne cohésion générale, les contacts entre la matrice cimentaire et la grenaille étant étroits. La répartition des particules de grenaille est homogène malgré la présence de quelques bulles d'air de diamètre généralement compris entre 0,2 et 0,8mm.

La détermination des proportions des différents constituants du matériau composite ainsi que le choix d'une granulométrie particulière pour la grenaille d'acier ont permis d'obtenir un matériau composite ayant une très bonne résistance à l'abrasion, proche de celle des aciers spéciaux et des minéraux électrofondus. Le fait de pouvoir introduire, dans le matériau composite, une quantité élevée de grenaille d'acier, par rapport à la quantité de liant hydraulique, et le choix d'un rapport minimal D10/D90 pour la grenaille d'acier permettent, en effet, d'obtenir un matériau composite présentant une résistance à l'abrasion élevée mais ils permettent également d'obtenir de bonnes performances mécaniques et une bonne adhérence sur métal. Par ailleurs, un tel matériau composite présente des caractéristiques lui permettant d'être facile à formuler et à mettre en forme à froid et il est relativement peu coûteux

L'introduction d'une quantité élevée de grenaille d'acier dans le matériau composite est, notamment, obtenue grâce à l'obtention d'un rapport E/C compris entre 0,16 et 0,25 et de préférence entre 0,20 et 0,25. De plus, il n'est pas nécessaire d'ajouter, dans le matériau composite, d'autres charges inertes telles que des graviers ou tout autre agrégat naturel.

Le choix d'un rapport minimal D10/D90 égal à 8 permet, quant à lui d'obtenir une compacité maximale de la pâte lors de la fabrication du matériau composite et donc un matériau composite très dense, avec une densité supérieure ou égale à 4. La compacité et la densité élevées du matériau composite permettent, notamment, d'obtenir de très bonnes performances mécaniques, une bonne résistance au choc et elles confèrent au matériau composite un caractère peu fragile.

Un tel matériau composite peut être, notamment, utilisé dans le domaine de la confection de revêtements anti-usure, pour les conduits de transport aérolique de matériaux abrasifs, les évacuateurs d'eau des barrages, les circuits de refroidissements secondaires des centrales nucléaires, des canalisations d'eaux industrielles ou pluviales ou ménagères à fort débit solide, les unités de pompage de boues, sur des bétons d'ouvrages hydrauliques... De même, il peut être utilisé pour revêtir des trémies telles que celles utilisées dans les grenailleuses, des conduits métalliques dans la manutention de poudres pulvérulentes à des températures inférieures à 200°C, des sols industriels soumis à des poussières abrasives, des socles de machines industrielles. Il peut également être mis en forme pour réaliser des blindages pour assurer une protection anti-effraction ou anti-projectiles, tels que les blindages de coffre-fort ou bien pour protéger les sites émettant des rayonnements dangereux. Le matériau composite peut également former des éléments quasi-métalliques réalisés à froid par moulage, pressage, laminage, injection, thixoformage, et usinables pour la confection à froid de pièces et bâtis soumises en service à des contraintes.

## Revendications

1. Matériau composite **caractérisé en ce qu'**il est obtenu par durcissement d'un mélange avec de l'eau d'une composition constituée par :
- un liant hydraulique constitué par du ciment ayant une teneur en aluminate tricalcique au moins inférieure à 5% en poids par rapport au poids total de liant hydraulique,
- de la grenaille à base d'acier ayant une distribution granulométrique comprise entre 120µm et 3000µm, avec une valeur de la taille de grain D10 de la grenaille au moins huit fois supérieure à la valeur de la taille de grain D90 du liant hydraulique et une proportion en poids de la grenaille comprise entre 250 et 800 parties pour 100 parties en poids de liant hydraulique,
- de la fumée de silice non densifiée ayant une granulométrie inférieure ou égale à 2µm, la proportion en poids de fumée de silice étant comprise entre 10 et 15 parties pour 100 parties en poids de liant hydraulique,
- un superplastifiant très haut réducteur d'eau,
- et un agent anti-mousse destiné à réduire la porosité du matériau composite après durcissement,
le rapport entre la quantité en poids d'eau et la quantité en poids de liant hydraulique étant compris entre 0,16 et 0,25
et **en ce qu'**il a un indice d'abrasion (1) mesuré selon le protocole C.N.R compris entre 0,15 et 1,0.

2. Matériau composite selon la revendication 1, **caractérisé en ce que** le rapport entre la quantité en poids d'eau et la quantité en poids de liant hydraulique est compris entre 0,20 et 0,25.

3. Matériau composite selon l'une des revendications 1 et 2, **caractérisé en ce que** la composition comporte, pour 100 parties en poids de liant hydraulique, entre 350 et 550 parties en poids de grenaille.

4. Matériau composite selon l'une quelconque des revendications 1 à 3, **caractérisé en ce que** la grenaille est constituée par un alliage à base de fer comportant également au moins :
- entre 0,0 et 3,5 % de carbone,
- entre 0,0 et 2% de silicium,
- entre 0,0 et 2 % de manganèse,
- entre 0,0 et 20 % de chrome,
- entre 0,0 et 10 % de nickel.

5. Matériau composite selon la revendication 4, **caractérisé en ce que** la grenaille est constituée par un alliage à base de fer comportant également au moins :
- entre 0,0 et 1,2 % de carbone,
- entre 0,0 et 1,2 % de silicium,
- entre 0,0 et 1,2 % de manganèse,
- entre 0,0 et 1,2 % de chrome,
- entre 0,0 et 0,3 % de nickel.

6. Matériau composite selon l'une quelconque des revendications 1 à 5, **caractérisé en ce que** la grenaille à base d'acier a une distribution granulométrique comprise entre 500 et 1200µm.

7. Matériau composite selon l'une quelconque des revendications 1 à 6, **caractérisé en ce que** la grenaille est ronde.

8. Matériau composite selon l'une quelconque des revendications 1 à 6, **caractérisé en ce que** la grenaille est angulaire.

9. Matériau composite selon l'une quelconque des revendications 1 à 8, **caractérisé en ce que** la grenaille à base d'acier comporte un mélange d'au moins deux types de grenaille distincts par leur distribution granulométrique.

10. Matériau composite selon l'une quelconque des revendications 1 à 9, **caractérisé en ce que** la masse volumique du matériau composite est comprise entre 4000 et 6000 kg/m³. et de préférence entre 4500 et 5200 kg/m³.

11. Procédé de fabrication d'un matériau composite selon l'une quelconque des revendications 1 à 10, **caractérisé en ce qu'**il comporte la formation d'un mélange frais en mélangeant successivement de l'eau, un superplastifiant très haut réducteur d'eau, de la fumée de silice, du ciment, de l'agent anti-mousse et de la grenaille à base d'acier, le mélange étant ensuite mis en forme avant durcissement.

12. Procédé de fabrication d'un matériau composite selon la revendication 11, **caractérisé en ce que** le mélange frais est formé en introduisant et en mélangeant préalablement, dans un mélangeur à haute turbulence l'eau, le superplastifiant très haut réducteur d'eau, la fumée de silice et le ciment de manière à former un coulis, la grenaille d'acier étant ensuite incorporée au coulis dans un malaxeur.

13. Procédé de fabrication d'un matériau composite selon la revendication 12, **caractérisé en ce qu'**une faible quantité d'eau est ajoutée dans le malaxeur, une fois le coulis formé, de manière à ajuster l'ouvrabilité du coulis.

14. Procédé de fabrication d'un matériau composite selon l'une quelconque des revendications 11 à 13, **caractérisé en ce que** le mélange frais est mis en forme de manière à obtenir, après durcissement, un revêtement anti-usure, un blindage ou un élément manufacturé de protection.

15. Procédé de fabrication d'un matériau composite selon la revendication 14, **caractérisé en ce que** la mise en forme est réalisée par moulage du mélange frais.

16. Procédé de fabrication d'un matériau composite selon la revendication 14, **caractérisé en ce que** la mise en forme est réalisée par injection du mélange frais.

17. Procédé de fabrication d'un matériau composite selon la revendication 14, **caractérisé en ce que** la mise en forme est réalisée par thixoformage du mélange frais.

18. Procédé de fabrication d'un matériau composite selon la revendication 14, **caractérisé en ce que** la mise en forme est réalisée par extrusion du mélange frais.

19. Procédé de fabrication d'un matériau composite selon la revendication 14, **caractérisé en ce que** la mise en forme est réalisée par projection, In situ, du mélange frais.

20. Procédé de fabrication d'un matériau composite selon l'une quelconque des revendications 14 à 19, **caractérisé en ce que** le mélange frais, après sa mise en forme, subit un traitement thermique.

21. Procédé de fabrication d'un matériau composite selon l'une quelconque des revendications 14 à 20, **caractérisé en ce que** le revêtement anti-usure, le blindage ou l'élément manufacturé de protection obtenu est usiné.

## Claims

1. Composite material **characterized in that** it is obtained by hardening a mixture of a composition with water, said composition consisting in :
- a hydraulic binder formed by cement having a tricalcium aluminate content at least less than 5% in weight with respect to the total weight of hydraulic binder,
- steel-based shot having a granulometric distribution comprised between 120µm and 3000µm, with a value of the D10 grain size of the shot at least eight times greater than the value of the D90 grain size of the hydraulic binder and a proportion in weight of shot comprised between 250 and 800 parts for 100 parts in weight of hydraulic binder,
- non-densified silica fume having a granulometry less than or equal to 2µm, the proportion in weight of silica fume being comprised between 10 and 15 parts for 100 parts in weight of hydraulic binder,
- a highly water-reducing superplasticizer,
- and a anti-foaming agent designed to reduce the porosity of the composite material after hardening,
the ratio between the weight quantity of water and the weight quantity of hydraulic binder being comprised between 0.16 and 0.25,
and **in that** it has an abrasion index (1) measured according to the C.N.R protocol comprised between 0.15 and 1.0.

2. Composite material according to claim 1, **characterized in that** the ratio between the weight quantity of water and the weight quantity of hydraulic binder is comprised between 0,20 and 0,25.

3. Composite material according to one of the claims 1 and 2, **characterized in that** the composition comprises, for 100 parts in weight of hydraulic binder, between 350 and 550 parts in weight of shot.

4. Composite material according to any one of the claims 1 to 3, **characterized in that** the shot is formed by an iron-based alloy also comprising at least:
- between 0,0 and 3.5% of carbon,
- between 0,0 and 2% of silicon,
- between 0,0 and 2% of manganese,
- between 0,0 and 20% of chromium,
- between 0,0 and 10% of nickel.

5. Composite material according to claim 4, **characterized in that** the shot is formed by an iron-based alloy also comprising at least:
- between 0,0 and 1,2% of carbon,
- between 0,0 and 1,2% of silicon,
- between 0,0 and 1,2% of manganese,
- between 0,0 and 1,2% of chromium,
- between 0,0 and 0,3% of nickel.

6. Composite material according to any one of the claims 1 to 5, **characterized in that** the steel-based shot has a granulometric distribution comprised between 500 and 1200µm.

7. Composite material according to any one of the claims 1 to 6, **characterized in that** the shot is round.

8. Composite material according to any one of the claims 1 to 6, **characterized in that** the shot is angular.

9. Composite material according to any one of the claims 1 to 8, **characterized in that** the steel-based shot comprises a mixture of at least two types of shot, differing by their granulometric distribution.

10. Composite material according to any one of the claims 1 to 9, **characterized in that** the density of the composite material is comprised between 4000 and 6000 kg/cm³, and preferably between 4500 and 5200 kg/cm³_{.}

11. Method for producing a composite material according to any one of the claims 1 to 10, **characterized in that** it comprises formation of a fresh mixture by successively mixing water, a highly water-reducing superplasticizer, silica fume, cement, anti-foaming agent and steel-based shot, the mixture then being shaped before hardening.

12. method for producing a composite material according to claim 11, **characterized in that** the fresh mixture is formed by previously incorporating and mixing into a high-turbulence mixer the water, the highly water-reducing superplasticizer, the silica fume and the cement so as to form a slurry, the steel shot then being incorporated in the slurry in a mixer.

13. Method for producing a composite material according to claim 12, **characterized in that** a small quantity of water is added in the mixer, once the slurry has been formed, so as to adjust the workability of the slurry.

14. Method for producing a composite material according to any one of the claims 11 to 13, **characterized in that** the fresh mixture is shaped so as to obtain, after hardening, a wear-resistant coating, a shielding or a manufactured protective element.

15. Method for producing a composite material according to claim 14, **characterized in that** shaping is performed by molding of the fresh mixture.

16. Method for producing a composite material according to claim 14, **characterized in that** shaping is performed by injection of the fresh mixture.

17. Method for producing a composite material according to claim 14, **characterized in that** shaping is performed by thixoforming of the fresh mixture.

18. Method for producing a composite material according to claim 14, **characterized in that** shaping is performed by extrusion of the fresh mixture.

19. Method for producing a composite material according to claim 14, **characterized in that** shaping is performed by projection, in situ, of the fresh mixture.

20. Method for producing a composite material according to any one of the claims 14 to 19, **characterized in that** the fresh mixture undergoes a thermal treatment after it has been shaped.

21. Method for producing a composite material according to any one of the claims 14 to 20, **characterized in that** the wear-resistant coating, the shielding or the manufactured protective element obtained is machined.

## Patentansprüche

1. Verbundwerkstoff, **dadurch gekennzeichnet, dass** er erhalten wird durch Aushärten einer Mischung einer Zusammensetzung mit Wasser, die besteht aus:
- einem hydraulischen Bindemittel, dem von Zement mit einem Tricalciumaluminat-Gehalt von wenigstens unter 5 Gew.-% bezogen auf das Gesamtgewicht des hydraulischen Bindemittels gebildet ist,
- Kies auf der Basis von Stahl, der eine Korngrößenverteilung im Bereich zwischen 120 *µ*m und 3000 *µ*m aufweist, mit einem Korngrößenwert D10 des Kieses, der wenigstens acht Mal größer ist als der Korngrößenwert D90 des hydraulischen Bindemittels, und einem Gewichtsanteil des Kieses zwischen 250 und 800 Teilen auf 100 Gewichtsteile hydraulisches Bindemittel,
- nicht verdichteten Silikastaub mit einer Korngröße kleiner oder gleich 2 *µ*m, wobei der Gewichtsanteil von Silikastaub zwischen 10 und 15 Teilen auf 100 Gewichtsteile hydraulisches Bindemittel liegt,
- einem sehr stark wasserreduzierenden Superplastifikator und
- einem Schaumverhütungsmittel, das dazu bestimmt ist, die Porosität des Verbundwerkstoffes nach dem Härten zu verringern,
wobei das Verhältnis zwischen der Gewichtsmenge an Wasser und der Gewichtsmenge an hydraulischem Bindemittel zwischen 0,16 und 0,25 beträgt, und dass er einen nach dem C.N.R.-Protokoll gemessenen Abriebwert (1) im Bereich zwischen 0,15 und 1,0 aufweist.

2. Verbundwerkstoff nach Anspruch 1, **dadurch gekennzeichnet, dass** das Verhältnis zwischen der Gewichtsmenge an Wasser und der Gewichtsmenge an hydraulischem Bindemittel zwischen 0,20 und 0,25 liegt.

3. Verbundwerkstoff nach einem der Ansprüche 1 bis 2, **dadurch gekennzeichnet, dass** die Zusammensetzung auf 100 Gewichtsteile hydraulisches Bindemittel zwischen 350 und 550 Gewichtsteile Kies umfasst.

4. Verbundwerkstoff nach einem der Ansprüche 1 bis 3, **dadurch gekennzeichnet, dass** der Kies aus einer eisenbasierten Legierung besteht, die auch wenigstens umfasst:
- zwischen 0,0 und 3,5 % Kohlenstoff,
- zwischen 0,0 und 2 % Silizium,
- zwischen 0,0 und 2 % Mangan,
- zwischen 0,0 und 20 % Chrom,
- zwischen 0,0 und 10 % Nickel.

5. Verbundwerkstoff nach Anspruch 4, **dadurch gekennzeichnet, dass** der Kies aus einer eisenbasierten Legierung besteht, die auch wenigstens umfasst:
- zwischen 0,0 und 1,2 % Kohlenstoff,
- zwischen 0,0 und 1,2 % Silizium,
- zwischen 0,0 und 1,2 % Mangan,
- zwischen 0,0 und 1,2 % Chrom,
- zwischen 0,0 und 0,3 % Nickel.

6. Verbundwerkstoff nach einem der Ansprüche 1 bis 5, **dadurch gekennzeichnet, dass** der Kies auf der Basis von Stahl eine Korngrößenverteilung im Bereich zwischen 500 und 1200 *µ*m aufweist.

7. Verbundwerkstoff nach einem der Ansprüche 1 bis 6, **dadurch gekennzeichnet, dass** der Kies kugelig ist.

8. Verbundwerkstoff nach einem der Ansprüche 1 bis 6, **dadurch gekennzeichnet, dass** der Kies scharfkantig ist.

9. Verbundwerkstoff nach einem der Ansprüche 1 bis 8, **dadurch gekennzeichnet, dass** der Kies auf der Basis von Stahl ein Gemisch aus wenigstens zwei durch ihre Korngrößenverteilung unterschiedlichen Kiesarten umfasst.

10. Verbundwerkstoff nach einem der Ansprüche 1 bis 9, **dadurch gekennzeichnet, dass** die volumenbezogene Masse des Verbundwerkstoffes zwischen 4000 und 6000 kg/m³ und vorzugsweise zwischen 4500 und 5200 kg/m³ liegt.

11. Verfahren zur Herstellung eines Verbundwerkstoffes nach einem der Ansprüche 1 bis 10, **dadurch gekennzeichnet, dass** es die Bildung einer frischen Mischung durch sukzessives Mischen von Wasser, einem sehr stark wasserreduzierenden Superplastifikator, Silikastaub, Zement, einem Schaumverhütungsmittel und Kies auf der Basis von Stahl umfasst, wobei die Mischung anschließend vor dem Härten in Form gebracht wird.

12. Verfahren zur Herstellung eines Verbundwerkstoffes nach Anspruch 11, **dadurch gekennzeichnet, dass** die frische Mischung dadurch gebildet wird, dass zuvor der sehr stark wasserreduzierende Superplastifikator, der Silikastaub und der Zement in einen Mischer mit starker Wasserverwirbelung eingeleitet und darin gemischt werden, um einen Brei zu bilden, wobei der Stahlkies anschließend in einem Kneter in den Brei eingebracht wird.

13. Verfahren zur Herstellung eines Verbundwerkstoffes nach Anspruch 12, **dadurch gekennzeichnet, dass** eine geringe Menge Wasser in den Kneter gegeben wird, sobald der Brei gebildet ist, um die Bearbeitbarkeit des Breis einzustellen.

14. Verfahren zur Herstellung eines Verbundwerkstoffes nach einem der Ansprüche 11 bis 13, **dadurch gekennzeichnet, dass** die frische Mischung in Form gebracht wird, um nach dem Härten eine Verschleißschutzbeschichtung, eine Panzerung oder ein Fertigschutzelement zu erhalten.

15. Verfahren zur Herstellung eines Verbundwerkstoffes nach Anspruch 14, **dadurch gekennzeichnet, dass** das Informbringen durch Formen der frischen Mischung vollzogen wird.

16. Verfahren zur Herstellung eines Verbundwerkstoffes nach Anspruch 14, **dadurch gekennzeichnet, dass** das Informbringen durch Spritzen der frischen Mischung vollzogen wird.

17. Verfahren zur Herstellung eines Verbundwerkstoffes nach Anspruch 14, **dadurch gekennzeichnet, dass** das Informbringen durch Thixoforming der frischen Mischung vollzogen wird.

18. Verfahren zur Herstellung eines Verbundwerkstoffes nach Anspruch 14, **dadurch gekennzeichnet, dass** das Informbringen durch Extrudieren der frischen Mischung vollzogen wird.

19. Verfahren zur Herstellung eines Verbundwerkstoffes nach Anspruch 14, **dadurch gekennzeichnet, dass** das Informbringen durch In-situ-Spritzen der frischen Mischung vollzogen wird.

20. Verfahren zur Herstellung eines Verbundwerkstoffes nach einem der Ansprüche 14 bis 19, **dadurch gekennzeichnet, dass** die frische Mischung nach ihrem Informbringen einer Wärmebehandlung unterzogen wird.

21. Verfahren zur Herstellung eines Verbundwerkstoffes nach einem der Ansprüche 14 bis 20, **dadurch gekennzeichnet, dass** die/das erhaltene Verschleißschutzbeschichtung, Panzerung oder Fertigschutzelement bearbeitet wird.
